# EUROPÄISCHE PATENTSCHRIFT

(11) **EP 1 173 352 B1**
(45) Veröffentlichungstag und Bekanntmachung des Hinweises auf die Patenterteilung: **27.08.2003**
(21) Anmeldenummer: 00926850.9
(22) Anmeldetag: 10.04.2000
(51) Int. Cl.: B60T 8/36, B60T 13/68

(54) **VENTILSPULENTRÄGER**
ELECTROMAGNETIC VALVE SUPPORT
SUPPORT DE BOBINES DE VANNES

(30) Priorität: 15.04.1999 DE 19917117; 27.08.1999 DE 19940696
(43) Veröffentlichungstag der Anmeldung: 23.01.2002
(73) Patentinhaber: Continental Teves AG & Co. oHG, 60488 Frankfurt (DE)
(72) Erfinder: RISCH, Stephan, D-64331 Weiterstadt (DE); KÄFER, Wolfgang, D-60596 Frankfurt (DE); HEISE, Andreas, D-64546 Mörfelden (DE); GILB, Jürgen, Peter, D-61352 Bad Homburg (DE)
(86) Internationale Anmeldenummer: EP0003169
(87) Internationale Veröffentlichungsnummer: WO00063053

(56) Entgegenhaltungen:
- WO-A-94/26568
- WO-A-97/35752
- DE-A- 19 619 968
- DE-A- 19 639 198
- DE-A- 19 833 498

## Beschreibung

Die Erfindung betrifft einen Ventilspulenträger, insbesondere für Kraftfahrzeug-Bremsdruckregelsysteme, nach dem Oberbegriff des Patentanspruchs 1.

Aus der DE 43 25 412 A1 ist bereits ein Ventilspulenträger hervorgegangen, der in einem rahmenförmigen Wandabschnitt mehrere Ventilspulen zum Aufsetzen auf ein elektrohydraulisches Drucksteuergerät aufweist, das mit Kanälen versehen ist, in die Ventile eingesetzt sind, welche durch die im Ventilspulenträger angeordneten Ventilspulen elektromagnetisch betätigt werden. Der rahmenförmige Wandabschnitt ist auf der vom Drucksteuergerät abgewandten Stirnseite mit einem Deckel verschlossen, wobei zwischen dem Deckel und dem Wandabschnitt eine Platte zur Aufnahme der Ventilspulen und der elektronischen Bauteile eines elektronischen Reglers abgedichtet angeordnet ist.

Zur Abdichtung der Ventilspulen im Ventilspulenträger bedarf es umfangreicher konstruktiver Maßnahmen, die unter anderem zwischen dem rahmenförmigen Wandabschnitt und dem Drucksteuergerät eine umlaufende Dichtung erfordern. Hierzu bedarf es zur einwandfreien Abdichtung der Ventilspulen präziser Dichtflächen entlang den Fügeabschnitten. Ein weiterer Nachteil des bekannten Ventilspulenträgers ist in der aufwendigen Herstellung einer Vielzahl von Einzelteilen zu sehen, die außerdem recht aufwendig in entgegengesetzten Montagerichtungen in den Ventilspulenträger eingesetzt werden müssen.

Aus der gattungsbildenden Druckschrift DE-A-198 33 498 ist bereits ein Steuergerät für eine hydraulische Bremsanlage bekannt, dessen Ventilspulenträger einen rahmenförmigen Wandabschnitt aufweist, der von der Unterseite durch eine plattenförmige Spulenhalterung und auf der Oberseite durch einen zu einem horizontalen Wandabschnitt ausgeformten Deckel begrenzt ist. Auf dem Deckel befindet sich eine Schalttafel, die von einer auf dem rahmenförmigen : Wandabschnitt aufgesetzten Abdeckung verschlossen ist. Zur Herstellung des Steuergeräts ist die Schalttafel von oben auf den Ventilspulenträger aufzusetzen, während die Ventilspulen von der Unterseite des Ventilspulenträgers in den Hohlraum des rahmenförmigen Wandabschnitt eingefügt werden müssen, wozu die plattenförmige Spulenhalterung aus dem Ventilspulenträger entfernt werden muß. Es erfolgt demnach eine Montage der Ventilspulen und der mit den Ventilspulen zu verbindenden Schalttafel aus entgegengesetzten Richtungen am Ventilspulenträger, dessen rahmenförmiger Wandabschnitt auf den jeweils gegenüberliegenden Seiten mit Abdichtungsmaterial versehen ist.

Daher ist es die Aufgabe der vorliegenden Erfindung, einen Ventilspulenträger der eingangs genannten Art dahingehend zu verbessern, daß mit möglichst einfachen Mitteln eine feuchtegeschützte Abdichtung und einfache Montage der funktionsrelevanten Bauteile innerhalb des rahmenförmigen Wandabschnittes gewährleistet ist, die sich besonders leicht herstellen und einfach im Ventilspulenträger montieren lassen.

Diese Aufgabe wird erfindungsgemäß für einen Ventilspulenträger der gattungsbildenden Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung eines Ausführungsbeispiels hervor.

Es zeigen:
- Fig. 1: einen Längsschnitt durch einen Ventilspulenträger vor dem Aufsetzen auf ein Drucksteuergerät,
- Fig. 2: eine Draufsicht auf die Konfiguration der Öffnungen im Boden des in Fig. 1 gezeigten Ventilspulenträgers.

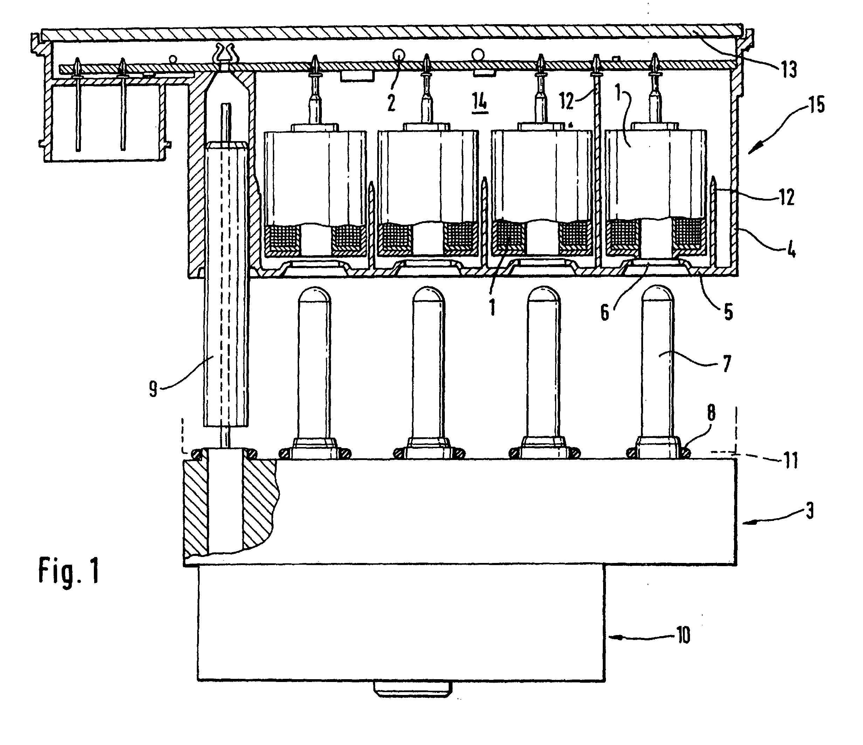

Die Fig. 1 zeigt in vergrößerter, schematischer Darstellung einen Ventilspulenträger 15 für eine Kraftfahrzeug-Bremsdruckregelanlage, bestehend aus einem rahmenförmigen Wandabschnitt 4 zum Aufsetzen auf ein unterhalb des Ventilspulenträgers 15 angeordnetes Drucksteuergerät 3, das mehrere fluidische Kanäle aufweist, in die Ventile eingesetzt sind, welche durch die im Ventilspulenträger 15 angeordneten Ventilspulen 1 betätigt werden. Der rahmenförmige Wandabschnitt 4 (vertikaler Wandabschnitt) ist auf der von dem Drucksteuergerät 3 abgewandten Stirnseite auf einfache Weise mittels einer Abdeckplatte (erster horizontaler Wandabschnitt) staub- und feuchtegeschützt verschlossen. Diese Abdeckplatte übernimmt die Funktion des von oben den rahmenförmigen Wandabschnitt 4 verschließenden Deckels 13. Unterhalb des Deckels 13 befindet sich im rahmenförmigen Wandabschnitt 4 elektromechanische als auch elektronische Bauteile 2 zum Anschluß der Ventilspulen 1 an einen elektronischen Regler, der im vorliegenden Ausführungsbeispiel als mit den notwendigen Bauteilen 2 bestückter Schaltungsträger gemeinsam mit den daran befestigten Ventilspulen 1 in den Ventilspulenträger 15 eingesetzt ist. Hierzu ist vorgeschlagen, daß die im vorliegenden Ausführungsbeispiel in mehreren Reihen im Ventilspulenträger 15 angeordneten Ventilspulen 1 mit den zum Anschluß der Ventilspulen 1 an die für den elektronischen Regler vorgesehenen Bauteile 2 ausschließlich aus einer einzigen, auf das Drucksteuergerät 3 zugewandten Montagerichtung und damit im gezeigten Ausführungsbeispiel von oben in den rahmenförmigen Wandabschnitt 4 eingesetzt werden, so daß die elektromechanischen als auch elektronischen Bauteile 2 mit dem abbildungsgemäßen Schaltungsträger als vorgefertigte Einheit mit den daran befestigten Ventilspulen 2 und den zugehörigen Jochblechen in Richtung auf einen an der Unterkante des Wandabschnitts 4 angeordneten Boden 5 (zweiter horizontaler Wandabschnitt) in den Ventilspulenträger 15 eingesetzt sind. Der rahmenförmige Wandabschnitt 4 braucht danach an seiner Oberkante lediglich mit dem Deckel 13 verschlossen zu werden, während der dem Drucksteuergerät 3 zugewandten Bereich des Ventilspulenträgers 15 mit seinem im wesentlichen plattenförmigen Boden 5 eine Dichtfunktion am Drucksteuergerät 3 wahrnimmt, sobald die am Drucksteuergerät 3 hervorstehenden Ventilhülsen 7 in die Öffnungen 6 am Boden 5 hineinreichen und mittels einer örtlichen, an jeder Ventilhülse 7 aufgesetzten Abdichtung 8 gegen den Boden 5 gepreßt werden. Analog zu den für die Ventilhülsen 7 vorgesehenen Öffnungen 6 am Boden 5 ist zur Hindurchführung einer am Drucksteuergerät 3 hervorstehenden elektrischen Kontaktierung in Form eines Steckkontaktes 9 eine weitere Öffnung 6 im plattenförmigen Boden 5 vorgesehen, womit auch der für das Motorpumpenaggregat 10 am Drucksteuergerät 3 vorgesehene Steckkontakt 9 staub- und feuchtegeschützte in den Ventilspulenträger 15 hineinragt. Hierzu ist zwischen dem Boden 5 und dem sich durch das Drucksteuergerät 3 erstreckenden Steckkontakt 9 des Motorpumpenaggregats 10 im Bereich der Öffnung 6 beispielsweise eine ringförmige Abdichtung 8 vorgesehen, die gleichfalls wie die einzelnen Abdichtungen 8 an den Ventilhülsen 7 vorzugsweise an der dem Boden 5 zugewandten Stirnfläche des Drucksteuergerätes 3 angeordnet ist, die vom Steckkontakt 9 durchdrungen ist. Die Abdichtungen 8 der korrosionsempfindlichen Ventilspulen 1 und des Steckkontaktes 9 lassen sich zweckmäßigerweise durch die Verwendung von Elastomerdichtungen realisieren, wobei durch die axiale Anpressung des Bodens 5 auf die dem Boden 5 zugewandte Stirnfläche des Drucksteuergerätes 3 eine die Dichtwirkung unterstützende Vorspannkraft wirksam ist, sobald der Ventilspulenträger 15 die Endmontageposition am Drucksteuergerät 3 erreicht hat. Dadurch, daß die ringförmig dargestellten Abdichtungen 8 unmittelbar an den Ventilhülsen 7 und dem Steckkontakt 9 vormontiert sind, ergibt sich eine besonders einfache Lagefixierung der Abdichtungen 8 an der Stirnfläche des Drucksteuergerätes 3. Abbildungsgemäß sind die Abdichtungen 8 als Ringdichtungen bzw. O-Ringe ausgeführt. Alternativ dazu ist gleichfalls die Verwendung von Flachdichtungen oder eine Abdichtung 8 durch Dichtmatten denkbar, die jeweils in dem Umfangsbereich der Ventilhülsen 7 und des Steckkontaktes 9 angeordnet sind. Dabei verbleibt grundsätzlich im peripheren Bereich der Öffnung 6 und zwar zwischen dem Boden 5 und der dem Boden 5 zugewandten Stirnfläche des Drucksteuergeräts 3 nach der Endmontage des Ventilspulenträgers 15 am Drucksteuergerät 3 ein nicht abgedichteter, dem Atmosphärendruck zugänglicher, korrosionsunempfindlicher Zwischenraum 11, der eben durch die jeweilige Abdichtung 8 an der betreffenden Ventilhülse 7 und/oder am Steckkontakt 9 vom Hohlraum 14 des Ventilspulenträgers 15 flüssigkeitsdicht getrennt ist. Zur einfachen Montage und Ausrichtung der durch die Ventilspulen 1 und den Bauteilen 2 gebildeten Unterbaugruppe im Ventilspulenträger 15 sind am Boden 5 Stege bzw. Zwischenwände 12 angeordnet, die sich achsparallel zu den Ventilspulen 1 entgegen der Einbaurichtung der Ventilspulen 1 in den Hohlraum 14 des rahmenförmigen Wandabschnitts 4 erstrecken. Der Wandabschnitt 4 bildet mit dem Boden 5 und den Zwischenwänden 12 eine einteilige Baugruppe, die vorzugsweise durch Kunststoffspritzgießen hergestellt ist.

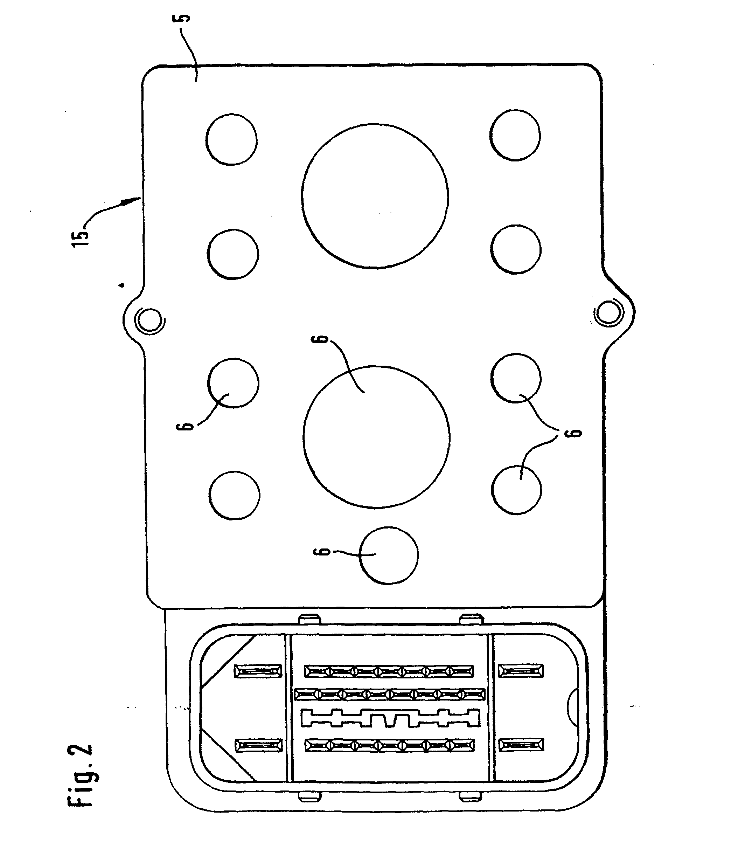

Zur Verdeutlichung des Gesamtaufbaus des Ventilspulenträgers 15 wird nunmehr auf Fig. 2 verwiesen, die in einer Draufsicht aus Richtung des Drucksteuergerätes 3 die schematische Anordnung der Öffnungen 6 am Boden 5 zwei Reihen zeigt. Zwischen den beiden Reihen sind im Boden 5 des Ventilspulenträgers 15 nebeneinander zwei relativ große Öffnungen 6 dargestellt, die abweichend von dem bisher zur Aufnahme der Ventilhülsen 7 und des Steckkontaktes 9 beschriebenen Öffnungen 6 bewußt keinerlei Abdichtungsmaßnahmen vorsehen, da über diese Öffnungen 6 eine Be- und Entlüftung der zwischen den beiden Reihen der Ventilhülsen 7 am Drucksteuergerät 3 hervorstehenden Niederdruckspeicher gewährleistet wird.

Durch den gewählten Aufbau des Ventilspulenträgers 15 und dessen Zusammenwirken mit dem Drucksteuergerät 3 wird eine besonders einfache Montage und Abdichtung von korrosionskritischen Bauteilen möglich, ohne eine besondere großflächige präzise Beschaffenheit der Oberflächen am Drucksteuergerät 3 und am Ventilspulenträger 15 gewährleisten zu müssen. Hierdurch sind die Ventilspulen 1 mit ihren Jochblechen als auch die Ventilhülsen 7 keiner von außen durch Spritzwasser oder dergleichen einwirkenden Feuchtigkeit ausgesetzt, womit für die genannten Teile kostengünstige und einfach herzustellende Werkstoffe verwendet werden können, die somit die bisherigen Anforderungen an einen besonderen Korrosionsschutz nicht mehr erfüllen müssen. Gleichzeitig ist durch die Erfindung eine weitgehend von Fertigungstoleranzen und Oberflächenrauhigkeiten unabhängige Abdichtung der Ventilspulen 1 möglich. Durch die Erfindung ist somit eine kostengünstige Abdichtung geschaffen, die eine nahezu toleranzfreie Ausrichtung und Abdichtung der Ventilspulen an den Ventilhülsen 7 gewährleistet, unabhängig davon, in welchem Umfang sich die Ventilspulen 1 und die zugehörigen Jochbleche axial als auch radial zur Ausrichtung an den Ventilhülsen 7 verformen. Damit entfallen auch die an sich bekannten Umspritzungs- und Einbettungsmaßnahmen der Ventilspulen 1 sowie die bisher flüssig zu applizierenden Dichtmittel während der Herstellung des Ventilspulenträgers 15. Eine Montageerleichterung ergibt sich auch, wenn alternativ zum erläuterten Montageverfahren die betriebsfähigen Ventilspulen 1 mit den elektrischen und elektronischen Bauteilen 2 als vormontierte Einheit erst nach der Befestigung des rahmenförmigen Wandabschnitts 4 am Drucksteuergerät 3 von der zunächst noch vom Deckel 13 unverschlossenen Oberseite in den Ventilspulenträger 15 eingesetzt werden. Andererseits läßt sich ebenso das Gehäuse des Ventilspulenträgers 15 auf Funktionsfähigkeit vorgeprüft und damit betriebsbereit vorbestückt mit seinen großzügig bemessenen, kreisrunden Öffnungen 6 am Boden 5 auf die überstehenden Ventilhülsen 7 und den Steckkontakt 9 schieben, wobei sich die Ventilspulen 1 besonders durch eine geeignete elastische Aufhängung im Ventilspulenträger 15 nachgiebig an den Ventilhülsen 7 zentrieren können. Anstelle der abbildungsgemäßen O-Ringe in der Funktion der Abdichtung 8 können selbstverständlich alternative Dichtmittel wie beispielsweise gestanzte Dichtungen oder auch Schlauchabschnitte verwendet werden, die entweder vor der Montage des Ventilspulenträgers 15 auf dem Drucksteuergerät 3 über die Ventilhülsen 7 und den seitlich dazu gezeigten Steckkontakt 9 aufgeschoben werden oder die unter bestimmten Voraussetzungen auch bei Bedarf unmittelbar am Boden 5 angebracht sein können. Durch diese nunmehr vorgeschlagene Abdichtung 8 an den feuchteempfindlichen Stellen des Ventilspulenträgers 15 läßt sich zwar infolge des nach der Montage zwischen dem Drucksteuergerät 3 und dem Ventilspulenträger 15 verbliebenen Zwischenraumes 11 auch ein Eindringen von Feuchtigkeit nicht ausschließen, jedoch ist dieser Feuchteeinfluß an den benetzten Stellen ohne Belang für die Funktion des Gesamtaggregats. Wie bereits unter Bezug auf Fig. 2 beschrieben wurde, begünstigt vielmehr der Zwischenraum 11 den Gasaustausch der beispielsweise zwischen den Ventilreihen befindlichen Niederdruckspeichern. Eine großflächige rahmenförmige Abdichtung entlang des Außenumfangs am Drucksteuergerät 3 würde hingegen unter Verwendung der vorgeschlagenen Erstreckung der Niederdruckspeicher in den Ventilspulenkörper 15 die Be- und Entlüftung der Niederdruckspeicher behindern. Durch den nunmehr vorgeschlagenen Aufbau des Ventilspulenträgers 15 bedarf es vorteilhafterweise keiner herstell- und kostenmäßig aufwendigen Umspritzung der Ventilspulendrähte, die beispielsweise als Einpreß- bzw. Steckverbinder den Schaltungsträger kontaktieren.

Bezüglich des Steckkontaktes 9, der die Stromversorgung des Motorpumpenaggregats 10 ermöglicht, wird vorgeschlagen, daß dieser aus sog. stabförmiger Meterware hergestellt wird oder daß dieser aus einem Ring ähnlich einer 2-adrigen Leitung besteht. Sofern hierbei die zwei relativ steifen und voneinander beanstandeten Leiter einen in Axialrichtung verlaufenden Kanal ermöglichen, ergibt sich ein besonders einfacher Druckausgleichskanal zwischen dem Innenraum des Elektromotors und dem Ventilspulenträger 15. Durch die erfindungsgemäße Verwendung einer ringförmigen Abdichtung 8 am Steckkontakt 9 werden sowohl der Innenraum des Motorpumpenaggregats 10 als auch der Hohlraum 14 im Ventilspulenträger von atmosphärischen Einflüssen und den Betriebseinflüssen in einer Kraftfahrzeugbremsanlage , insbesondere durch von Spritz- und Kondenswasser bedingten Feuchteeinflüssen, vermieden.
Bezüglich der vorgeschlagenen Abdichtung 8 der Ventile gelangen jeweils zwei Dichtbereiche zur Anwendung, die wahlweise als Kontaktflächen entweder in Axialrichtung und damit in Montagerichtung zwischen dem Boden 5 und der verwendeten Dichtung sowie in Radialrichtung zwischen der Ventilhülse 7 und der Dichtung gelegen sind. Alternativ lassen sich die zwei Dichtbereiche in der Axialrichtung für die Abdichtung 8 zwischen dem Boden 5 und dem Drucksteuergerät 3 oder zwischen dem eventuell von der gewählten Abdichtung 8 gerade kontaktierten Ventilsitz darstellen. Auch die Auflagefläche der Abdichtung 8 am Drucksteuergerät 3 kann bei Wunsch oder Bedarf als zusätzliche Dichtfläche in Form einer Grobabdichtung wirken. Die Auflagefläche kann auch in Kombination mit der Abdichtung 8 an der Ventilhülse 7 das eventuell aus dem Befestigungsbereich des Ventils bzw. der Ventilhülse 7 im Drucksteuergerät 3 ausschwitzende Flüssigkeitsvolumen wirkungsvoll vor den flüssigkeitsempfindlichen Ventilspulenbereich zurückhalten.

Für die vorgestellten Abdichtungsmaßnahmen ist hierbei von Bedeutung, daß die jeweils gewählte Dichtung zwischen der Ventilspule 1 und dem Drucksteuergerät 3 an dem dazwischen liegenden Boden 5 im wesentlichen in Axialrichtung und damit in der Montagerichtung der Baugruppen beansprucht wird. Hierbei kann die Dichtung zur baulichen Darstellung der Abdichtung 8 auch jeweils als gespritzte Formdichtung oder auch als Dichtmatte, die mehrere Dichtringe für mehrere Ventile aufweist, ausgeführt sein. Ferner kann die Dichtung als elastische Abstützung für den Jochring oder den Wickelkörper der Ventilspule 1 dienen.

Bezüglich der bereits erwähnten Zwischenwand 12 läßt sich nachtragen, daß diese sich gegebenenfalls bis zu den elektronischen Bauteilen 2 als Stützwand erstreckt, die beispielsweise mit einer die Bauteile aufnehmenden Leiterplatte, insbesondere mittels einem Clip oder dergleichen verbunden sein kann.

Je nach Formgebung der Jochringe können sich diese innerhalb der Öffnungen 6 in radialer Richtung am Boden 5 abstützen, wodurch sich eine Montagevereinfachung beim Zusammenfügen der Baugruppen ergibt.

Selbstverständlich kann der Steckkontakt 9 als loses oder auch als festes, entweder im Ventilspulenträger 15 oder im Drücksteuergerät 3 integriertes Bauteil ausgeführt sein, wobei mit dem Begriff Steckkontakt ebenso ein Steckerteil als auch Steckadapter mit eingeschlossen ist.

### Bezugszeichenliste

- 1: Ventilspule
- 2: Bauteile
- 3: Drucksteuergerät
- 4: Wandabschnitt
- 5: Boden
- 6: Öffnung
- 7: Ventilhülse
- 8: Abdichtung
- 9: Steckkontakt
- 10: Motorpumpenaggregat
- 11: Zwischenraum
- 12: Zwischenwand
- 13: Deckel
- 14: Hohlraum
- 15: Ventilspulenträger

## Patentansprüche

1. Ventilspulenträger, insbesondere für Kraftfahrzeug-Bremsdruckregelsysteme, mit wenigstens einer Ventilspule (1) in einem rahmenförmigen Wandabschnitt (4) zum Aufsetzen auf ein hydraulisches und/oder pneumatisches Drucksteuergerät (3), das in einem fluidischen Kanal wenigstens ein Ventil aufweist, das zur Druckmittelsteuerung mittels der Ventilspule (1) elektrisch betätigbar ist, wobei der rahmenförmige Wandabschnitt (4) auf der von dem Drucksteuergerät (3) abgewandten Stirnseite geschlossen ist und wobei innerhalb des rahmenförmigen Wandabschnitts (4) zumindest ein Bauteil (2) zum Anschluß der Ventilspule (1) an einen elektronischen Regler angeordnet ist, und wobei die Ventilspule (1) auf einen mit dem rahmenförmigen Wandabschnitt (4) verbundenen Boden (5) gerichtet ist, **dadurch gekennzeichnet, daß** im Bereich einer Öffnung (6) im Boden (5) eine Abdichtung (8) vorgesehen ist, die die Ventilspule (1) nach einer Montage des Ventilspulenträgers (15) am Drucksteuergerät (3) gegenüber einer Feuchteeinwirkung schützt, und daß die Ventilspule (1) zur Montage im Ventilspulenträger (15) mit dem an einem Schaltungsträger angebrachten Bauteil (2) als vorgefertigte Einheit ausschließlich aus einer einzigen, auf das Drucksteuergerät (3) zugewandten Montagerichtung in Richtung des Bodens (5) in den rahmenförmigen Wandabschnitt (4) eingesetzt ist.

2. Ventilspulenträger nach Anspruch 1, **dadurch gekennzeichnet, daß** der rahmenförmige Wandabschnitt (4) auf der dem Drucksteuergerät (3) zugewandten Stirnseite einen im wesentlichen plattenförmigen Boden (5) aufweist, der die koaxial zur Ventilspule (1) angeordnete Öffnung (6) zur Hindurchführung einer am Drucksteuergerät (3) hervorstehenden Ventilhülse (7) des Ventils aufweist.

3. Ventilspulenträger nach Anspruch 2, **dadurch gekennzeichnet, daß** zwischen dem Boden (5) und der Ventilhülse (7) im Bereich der Öffnung (6) die Abdichtung (8) vorgesehen ist, die vorzugsweise an der Ventilhülse (7) vormontiert ist.

4. Ventilspulenträger nach Anspruch 1, **dadurch gekennzeichnet, daß** der rahmenförmige Wandabschnitt (4) auf der dem Drucksteuergerät (3) zugewandten Stirnseite im Bereich des plattenförmigen Bodens (5) eine weitere koaxial zu einem Steckkontakt (9) angeordnete Öffnung (6) aufweist, durch die sich der am Drucksteuergerät (3) hervorstehender Steckkontakt (9) für ein vom Drucksteuergerät (3) aufgenommenes Motor-Pumpenaggregat (10) in den rahmenförmigen Wandabschnitt (4) erstreckt.

5. Ventilspulenträger nach Anspruch 4, **dadurch gekennzeichnet, daß** zwischen dem Boden (5) und dem Steckkontakt (9) des Motorpumpenaggregats (10) im Bereich der Öffnung (6) eine Abdichtung (8) vorgesehen ist.

6. Ventilspulenträger nach Anspruch 3 oder 5, **dadurch gekennzeichnet, daß** die Abdichtung (8) durch ein Elastomer gebildet ist, das durch eine am Boden (5) wirksame Anpreßkraft abdichtend auf die dem Boden (5) zugewandte Gehäusefläche des Drucksteuergeräts (3) vorgespannt ist.

7. Ventilspulenträger nach Anspruch 3 oder 5, **dadurch gekennzeichnet, daß** die Abdichtung (8) durch die in Richtung des Bodens (5) hervorstehenden Ventilhülse (7) und/oder durch den Steckkontakt (9) lagefixiert ist.

8. Ventilspulenträger nach Anspruch 3 oder 5, **dadurch gekennzeichnet, daß** die Abdichtung (8) wahlweise durch eine Ringdichtung, eine Flachdichtung oder eine Dichtmatte erfolgt.

9. Ventilspulenträger nach Anspruch 2, **dadurch gekennzeichnet, daß** nach dem Aufsetzen des rahmenförmigen Wandabschnitts (4) auf das Drucksteuergerät (3) ein nicht abgedichteter, dem Atmosphärendruck zugänglicher Zwischenraum (11) zwischen dem Boden (5) und der dem Boden (5) zugewandten Stirnfläche des Drucksteuergerätes (3) gelegen ist, der durch die Abdichtung (8) an der Ventilhülse (7) und/oder am Steckkontakt (9) vom Hohlraum (14) flüssigkeitsdicht getrennt ist.

10. Ventilspulenträger nach Anspruch 2, **dadurch gekennzeichnet, daß** am Boden (5) Zwischenwände (12) oder Stifte angeordnet sind, die sich vorzugsweise zur Führung der Ventilspulen (1) und/oder zur Halterung von Bauteilen (2) achsparallel zur Ventilspule (1) in einen Hohlraum (14) des rahmenförmigen Wandabschnitts (4) erstrecken.

## Claims

1. Valve coil support, in particular for automotive vehicle brake pressure control systems, including at least one valve coil (1) in a frame-shaped wall portion (4) for mounting onto a hydraulic and/or pneumatic pressure control device (3) which has at least one valve in a fluid channel that is electrically operable by means of the valve coil (1) for pressure fluid control, wherein the frame-shaped wall portion (4) is closed on the frontal end remote from the pressure control device (3), and wherein at least one component (2) is arranged within the frame-shaped wall portion (4) for connecting the valve coil (1) to an electronic controller, and wherein the valve coil (1) is directed to a bottom (5) which is connected to the frame-shaped wall portion (4),
**characterized in that** a gasket (8) is provided in the bottom (5) in the area of an opening (6) which protects the valve coil (1) after assembly of the valve coil support (15) on the pressure control device (3) against the effects of moisture, and **in that** for installation in the valve coil support (15), the valve coil (1) along with the component (2) fitted to a circuit support member is inserted as a prefabricated unit into the frame-shaped wall portion (4) in the direction of the bottom (5) exclusively from one single assembly direction facing the pressure control device (3).

2. Valve coil support as claimed in claim 1,
**characterized in that** the frame-shaped wall portion (4), on the frontal end close to the pressure control device (3), includes a substantially plate-shaped bottom (5) with an opening (6) that is arranged coaxially to the valve coil (1) for the passage of a valve sleeve (7) of the valve protruding from the pressure control device (3).

3. Valve coil support as claimed in claim 2,
**characterized in that** a gasket (8) which is preferably pre-assembled on the valve sleeve (7) is arranged in the area of the opening (6) between the bottom (5) and the valve sleeve (7).

4. Valve coil support as claimed in claim 1,
**characterized in that** the frame-shaped wall portion (4) on the frontal end close to the pressure control device (3) in the area of the plate-shaped bottom (5) includes another opening (6) which is arranged coaxially to a plug contact (9) and through which extends the plug contact (9) projecting from the pressure control device (3) into the frame-shaped wall portion (4), said plug contact being intended for a motor-and-pump assembly (10) accommodated in the pressure control device (3)

5. Valve coil support as claimed in claim 4,
**characterized in that** a gasket (8) is provided in the area of the opening (6) between the bottom (5) and the plug contact (9) of the motor-and-pump assembly (10).

6. Valve coil support as claimed in claim 3 or 5,
**characterized in that** the gasket (8) is provided by an elastomeric element which is biassed by a pressing force that acts on the bottom (5) in a sealing manner towards the housing surface of the pressure control device (3) facing the bottom (5).

7. Valve coil support as claimed in claim 3 or 5,
**characterized in that** the gasket (8) is fixed in position by the valve sleeve (7) projecting in the direction of the bottom (5) and/or by the plug contact (9).

8. Valve coil support as claimed in claim 3 or 5,
**characterized in that** the gasket (8) is alternatively provided by a ring seal, a flat seal, or a sealing mat.

9. Valve coil support as claimed in claim 2,
**characterized in that** after the frame-shaped wall portion (4) has been fitted on the pressure control device (3), a non-sealed space (11) accessible for atmospheric pressure is disposed between the bottom (5) and the frontal end of the pressure control device (3) close to the bottom (5), the said space being fluid-tightly isolated from the cavity (14) by the gasket (8) at the valve sleeve (7) and/or at the plug contact (9).

10. Valve coil support as claimed in claim 2,
**characterized in that** partition walls (12) or pins are arranged at the bottom (5) which extend paraxially to the valve coil (1) into a cavity (14) of the frame-shaped wall portion (4), preferably for guiding the valve coils (1) and/or for the mounting support of components (2).

## Revendications

1. Support de bobines de vannes, notamment pour des systèmes de régulation de la pression des freins d'un véhicule automobile, comportant au moins une bobine de vanne (1) dans un segment de paroi (4) en forme de cadre pour la mise en place sur un appareil de commande de pression (3) hydraulique et/ou pneumatique, qui comprend dans un canal fluidique au moins une vanne, laquelle peut être actionnée électriquement au moyen de la bobine de vanne (1) pour la commande du moyen de freinage, dans lequel le segment de paroi (4) en forme de cadre est obturé sur le côté frontal tourné à l'opposé de l'appareil de commande de pression (3), et à l'intérieur du segment de paroi (4) en forme de cadre est disposé au moins un élément constitutif (2) pour le raccordement de la bobine de vanne (1) à un régulateur électronique, et dans lequel la bobine de vanne (1) est dirigée vers un fond (5) relié au segment de paroi (4) en forme de cadre, **caractérisé en ce que** dans la zone d'une ouverture (6) dans le fond (5), il est prévu un joint d'étanchéité (8) qui protège contre un effet d'humidité la bobine de vanne (1), après un montage du support de bobine de vannes (15) sur l'appareil de commande de pression (3), et **en ce que** pour le montage dans le support de bobines de vannes (15), la bobine de vanne (1) est mise en place dans la direction du fond (5) dans le segment de paroi (4) en forme de cadre, avec l'élément constitutif (2) rapporté à un support de circuits, comme une unité préalablement préparée exclusivement à partir d'une seule direction de montage tournée vers l'appareil de commande de pression (3).

2. Support de bobines de vannes selon la revendication 1, **caractérisé en ce que** le segment de paroi (4) en forme de cadre comporte, sur le côté frontal tourné vers l'appareil de commande de pression (3), un fond (5) essentiellement en forme de plaque, qui présente l'ouverture (6) agencée coaxialement à la bobine de vanne (1) pour la traversée guidée d'une douille de vanne (7) saillant sur l'appareil de commande de pression (3).

3. Support de bobines de vannes selon la revendication 2, **caractérisé en ce que**, entre le fond (5) et la douille de vanne (7), dans la zone de l'ouverture (6), il est prévu le joint d'étanchéité (8), qui de préférence est pré-monté sur la douille de vanne (7).

4. Support de bobines de vannes selon la revendication 1, **caractérisé en ce que** le segment de paroi (4) en forme de cadre comporte, sur le côté frontal toumé vers l'appareil de commande de pression (3) dans la zone du fond (5) en forme de plaque, une autre ouverture (6) agencée coaxialement à un contact à fiche (9), par laquelle s'étend dans le segment de paroi (4) en forme de cadre le contact à fiche (9), saillant de l'appareil de commande de pression (3) d'un groupe motopompe (10) reçu par l'appareil de commande de pression (3).

5. Support de bobines de vannes selon la revendication 4 , **caractérisé en ce que**, entre le fond (5) et le contact à fiche (9) du groupe motopompe (10), il est prévu un joint d'étanchéité (8) dans la zone de l'ouverture (6).

6. Support de bobines de vannes selon la revendication 3 ou 5, **caractérisé en ce que** le joint d'étanchéité (8) est formé par un élastomère, qui est pré-contraint par une force d'application sous pression rendant étanche la surface du boîtier de l'appareil de commande de pression (3) tournée vers le fond (5).

7. Support de bobines de vannes selon la revendication 3 ou 5, **caractérisé en ce que** le joint d'étanchéité (8) est fixé en position par la douille de vannes (7) saillant en direction du fond (5), et/ou par le contact à fiche (9).

8. Support de bobines de vannes selon la revendication 3 ou 5, **caractérisé en ce que** le joint d'étanchéité (8) est réalisé, au choix par une bague d'étanchéité, une garniture d'étanchéité plate ou une natte étanche.

9. Support de bobines de vannes selon la revendication 2, **caractérisé en ce que**, après mise en place du segment de paroi (4) en forme de cadre sur l'appareil de commande de pression (3), un espace intercalaire (11) accessible à la pression atmosphérique est installé entre le fond (5) et la surface frontale de l'appareil de commande de pression (3) tournée vers le fond (5), lequel est séparé de manière étanche aux fluides de l'espace creux (14) par le joint d'étanchéité (8) sur la douille de vanne (7) et/ou sur le contact à fiche (9).

10. Support de bobines de vannes selon la revendication 2,**caractérisé en ce que** des parois intercalaires (12) ou des broches sont disposées sur le fond (5), et s'étendent parallèlement à l'axe de la bobine de vanne (1) dans un espace creux (14) du segment de paroi (4) en forme de cadre, de préférence pour le guidage des bobines de vannes (1) et/ou pour l'attache d'éléments constitutifs (2).
